(19) Europäisches Patentamt
European Patent Office
Office européen des brevets

(11) **EP 3 901 582 B1**

(12) **EUROPÄISCHE PATENTSCHRIFT**

(45) Veröffentlichungstag und Bekanntmachung des Hinweises auf die Patenterteilung:
**17.05.2023 Patentblatt 2023/20**

(21) Anmeldenummer: **21153915.0**

(22) Anmeldetag: **28.01.2021**

(51) Internationale Patentklassifikation (IPC):
**G01D 5/20** (2006.01)

(52) Gemeinsame Patentklassifikation (CPC):
**G01D 5/206**

(54) **INDUKTIVE WINKELMESSEINRICHTUNG**

INDUCTIVE ANGLE MEASURING DEVICE

DISPOSITIF INDUCTIF DE MESURE D'ANGLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2020 DE 102020205202**

(43) Veröffentlichungstag der Anmeldung:
**27.10.2021 Patentblatt 2021/43**

(73) Patentinhaber: **Dr. Johannes Heidenhain GmbH 83301 Traunreut (DE)**

(72) Erfinder:
• HEUMANN, Martin
83278 Traunstein (DE)
• TIEMANN, Marc Oliver
83329 Waging am See (DE)

(56) Entgegenhaltungen:
EP-A2- 0 909 955          EP-A2- 1 715 298
DE-A1-102017 103 122      DE-T2- 69 526 770
US-A- 5 406 155

**Beschreibung**

## GEBIET DER TECHNIK

Die Erfindung betrifft eine induktive Winkelmesseinrichtung zur Bestimmung von Relativwinkelpositionen gemäß dem Anspruch 1.

Induktive Winkelmesseinrichtungen werden beispielsweise als Winkelmessgeräte zur Bestimmung der Winkelposition zweier relativ zueinander drehbarer Maschinenteile verwendet. Bei induktiven Winkelmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator eines Winkelmessgeräts fest verbunden ist. Dieser Leiterplatte gegenüber befindet sich ein Skalenelement, auf dem Teilungsstrukturen aufgebracht sind, und welches mit dem Rotor des Winkelmessgeräts drehfest verbunden ist. Wenn an den Erregerspulen ein zeitlich wechselnder elektrischer Erregerstrom angelegt wird, werden in den Empfängerspulen während der Relativdrehung zwischen Rotor und Stator von der Winkelposition abhängige Signale erzeugt. Diese Signale werden dann in einer Auswerteelektronik weiterverarbeitet.

Häufig werden derartige induktive Winkelmesseinrichtungen als Messgeräte für elektrische Antriebe, zur Bestimmung der Relativbewegung beziehungsweise der Relativlage von entsprechenden Maschinenteilen eingesetzt. In diesem Fall werden die erzeugten Winkelpositionswerte einer Folgeelektronik zur Ansteuerung der Antriebe über eine entsprechende Schnittstellenanordnung zugeführt.

## STAND DER TECHNIK

In der EP 2 329 225 B1 der Anmelderin wird eine induktive Winkelmesseinrichtung beschrieben, bei der durch die Bildung eines Mittelwerts ein vergleichsweise exaktes Messergebnis erreicht wird, das reduzierte Oberschwingungen beziehungsweise Oberwellen, insbesondere der dritten Ordnung aufweist.

Aus der EP 0 909 955 A2 ist ein induktiver Winkelsensor bekannt, der eine Kurzschlussleitung am Rotorelement aufweist, welche durch Empfangsspulen abtastbar ist, die vergleichsweise lange geradlinig verlaufende Abschnitte aufweist.

In der Offenlegungsschrift EP 1 715 298 A2 ist eine induktive Winkelmesseinrichtung offenbart, die zwei Empfänger- und zwei Teilungsspuren aufweist. Die Teilungsspuren umfassen dort in einem Ausführungsbeispiel in Umfangsrichtung verlaufende Abschnitte und zudem radial verlaufende Abschnitte. Bei jener Anordnung ist die Messgenauigkeit bedingt durch störende Oberwellen reduziert.

## ZUSAMMENFASSUNG DER ERFINDUNG

Der Erfindung liegt die Aufgabe zugrunde eine induktive Winkelmesseinrichtung zu schaffen, durch die eine genaue Bestimmung einer relativen Winkelposition ermöglicht ist durch Herausfiltern von Oberwellen aus von Empfängerleiterbahnen empfangenen Signalen.

Diese Aufgabe wird erfindungsgemäß durch die Merkmale des Anspruches 1 gelöst.

Die induktive Winkelmesseinrichtung weist ein Abtastelement und ein Skalenelement auf. Das Skalenelement umfasst eine um eine Achse umlaufende Teilungsspur, wobei die Teilungsspur mehrere Leiterbahngruppen aufweist, welche elektrisch verbunden sind und in Messrichtung so aneinandergereiht angeordnet sind, dass benachbarte Leiterbahngruppen in Messrichtung einen Mittenabstand aufweisen. Die Leiterbahngruppen weisen jeweils einen ersten Leiterbahnabschnitt, einen zweiten Leiterbahnabschnitt, einen dritten Leiterbahnabschnitt und einen vierten Leiterbahnabschnitt auf. Diese vier Leiterbahnabschnitte erstrecken sich quer zur Messrichtung, also mit einer Richtungskomponente orthogonal zur Messrichtung. Häufig entspricht die Messrichtung der Umfangsrichtung bezogen auf die Achse beziehungsweise um die Achse herum. Der erste Leiterbahnabschnitt und der zweite Leiterbahnabschnitt sind elektrisch miteinander verbunden. Ebenso sind der dritte Leiterbahnabschnitt und der vierte Leiterbahnabschnitt elektrisch miteinander verbunden. Innerhalb einer Leiterbahngruppe ist der erste Leiterbahnabschnitt gegenüber dem dritten Leiterbahnabschnitt mit einem Abstand in Messrichtung versetzt angeordnet. Zudem ist innerhalb einer Leiterbahngruppe der vierte Leiterbahnabschnitt gegenüber dem zweiten Leiterbahnabschnitt mit dem (gleichen) Abstand versetzt angeordnet. Der Abstand ist so dimensioniert, dass er dem Mittenabstand geteilt durch eine Natürliche Zahl M grösser oder gleich 4 entspricht. Das Abtastelement weist eine Erregerspur und eine Empfängerspur mit zumindest zwei Empfängerleiterbahnen auf, wobei die Empfängerleiterbahnen einen sinusförmigen umlaufenden räumlich periodischen Verlauf aufweisen mit einer Periodenlänge, die dem Mittenabstand entspricht.

Mit Hilfe dieser Vorrichtung sind durch die Empfängerleiterbahnen Signale erzeugbar, die praktisch keine störenden Oberwellenanteile aufweisen, wobei die sinusförmigen Empfängerleiterbahnen keine geradlinigen Abschnitte aufweisen.

Üblicherweise sind das Abtastelement und das Skalenelement einander gegenüber liegend angeordnet und durch einen Luftspalt, der sich in axialer oder radialer Richtung erstreckt, voneinander beabstandet. Häufig sind die Empfängerleiterbahnen so angeordnet, dass diese einen Phasenversatz (z.B. einen Phasenversatz von 90°) zueinander aufweisen.

Mit Vorteil ist die induktive Winkelmesseinrichtung so konfiguriert, dass das Abtastelement zwei Erregerspuren aufweist, welche jeweils mindestens eine Leiterbahn umfassen, wobei die Erregerspuren in Messrichtung beziehungsweise entlang der Messrichtung verlaufen. Zudem ist die Empfängerspur zwischen den Erregerspuren angeordnet. Die Winkelmesseinrichtung umfasst weiterhin eine elektronische Schaltung, durch welche in den Erregerspuren ein elektrischer Erregerstrom erzeugbar ist. Mit Vorteil verläuft zu einem bestimmten Zeitpunkt der Erregerstrom in den zumindest zwei Erregerspuren in gleicher Richtung.

In weiterer Ausgestaltung der Erfindung ist die Natürliche Zahl M grösser oder gleich 6.

Im Folgenden werden Mittenabstände und Abstände zwischen Leiterbahnabschnitten winkelmäßig angegeben also entweder in Grad beziehungsweise Bruchteilen eines Vollwinkels oder im Bogenmaß.

Eine Leiterbahngruppe ist im Folgenden insbesondere als ein Bereich auf dem Skalenelement zu verstehen, in dem über einen Abschnitt in Messrichtung mit einer Ausdehnung, die dem Mittenabstand TP entspricht, deckungsgleiche Verläufe der Leiterbahnabschnitte, insbesondere der gesamten Leiterbahnen, vorliegen, wenn der betreffende Abschnitt um den winkelmäßigen Mittenabstand TP oder ein ganzzahliges Vielfaches davon gedreht wird. Somit weist das Skalenelement Abschnitte auf, nämlich die Leiterbahngruppen, die periodisch wiederkehrend mit der Periode, die dem Mittenabstand TP entspricht, angeordnet sind. Die Leiterbahngruppen sind elektrisch in Serie miteinander verbunden, so dass eine elektrisch geschlossene Teilungsspur vorliegt, insbesondere können die Leiterbahngruppen Teilbereiche von Leiterbahnen sein, die insbesondere endlos ausgestaltet sind.

Die Leiterbahngruppen können so ausgestaltet sein, dass der Verlauf der darin befindlichen Leiterbahnabschnitte achsensymmetrisch bezüglich einer radial verlaufenden Symmetrieachse ist.

Mit Vorteil ist das Skalenelement so ausgestaltet, dass sich die vier Leiterbahnabschnitte bezogen auf die Achse jeweils in einer Richtung mit radialer Richtungskomponente erstrecken.

Vorteilhaft weist die Teilungsspur eine Anzahl N von Leiterbahngruppen auf, wobei der Mittenabstand TP dem Quotienten aus dem Vollwinkel und der Anzahl N von Leiterbahngruppen entspricht, so dass also gilt TP = 360°/N. Gleichbedeutend kann diese Betrachtung auch im Bogenmaß durchgeführt werden, so dass dann TP = $2\pi$/N gilt.

Gemäß einer vorteilhaften Ausgestaltung der Erfindung entspricht der Abstand, bezogen auf die Messrichtung, zwischen zwei nicht unmittelbar benachbarten Leiterbahnabschnitten innerhalb einer Leiterbahngruppe dem halben Mittenabstand. Insbesondere ist innerhalb einer Leiterbahngruppe der erste Leiterbahnabschnitt gegenüber dem vierten Leiterbahnabschnitt mit einem Abstand, der dem halben Mittenabstand entspricht, in Messrichtung versetzt angeordnet. Zudem ist innerhalb einer Leiterbahngruppe der dritte Leiterbahnabschnitt gegenüber dem zweiten Leiterbahnabschnitt mit einem Abstand, der dem halben Mittenabstand entspricht, versetzt angeordnet.

Mit Vorteil sind der erste Leiterbahnabschnitt und der zweite Leiterbahnabschnitt sowie ein erster Verbindungsleiterbahnabschnitt und ein zweiter Verbindungsleiterbahnabschnitt Abschnitte einer ersten Leiterbahn. Weiterhin sind der erste Leiterbahnabschnitt und der zweite Leiterbahnabschnitt durch den ersten Verbindungsleiterbahnabschnitt und den zweiten Verbindungsleiterbahnabschnitt seriell elektrisch miteinander verbunden. Der dritte Leiterbahnabschnitt und der vierte Leiterbahnabschnitt sowie ein dritter Verbindungsleiterbahnabschnitt und ein vierter Verbindungsleiterbahnabschnitt sind Abschnitte einer zweiten Leiterbahn, wobei der dritte Leiterbahnabschnitt und der vierte Leiterbahnabschnitt durch den dritten Verbindungsleiterbahnabschnitt und den vierten Verbindungsleiterbahnabschnitt seriell elektrisch miteinander verbunden sind.

Vorteilhafterweise erstrecken sich die Verbindungsleiterbahnabschnitte in einer Richtung mit einer Richtungskomponente parallel zur Messrichtung.

Mit Vorteil sind die vier Leiterbahnabschnitte auf einer planen Ebene angeordnet.

In weiterer Ausgestaltung der Erfindung sind die Verbindungsleiterbahnabschnitte in Messrichtung bezüglich der Leiterbahnabschnitte abwechselnd radial innen und radial außen angeordnet.

Alternativ können die Leiterbahnabschnitte auch auf einer umlaufenden Fläche beispielsweise einer Mantelfläche eines zylindrischen Körpers angeordnet sein. In diesem Fall erstrecken sich die vier Leiterbahnabschnitte in einer Richtung mit axialer Richtungskomponente (bezogen auf die (Dreh-) Achse). Dann weist das Skalenelement eine gekrümmte Fläche auf, auf der die Teilungsspur angeordnet ist. Die Leiterbahngruppen können dann so ausgestaltet sein, dass der Verlauf der darin befindlichen Leiterbahnabschnitte achsensymmetrisch bezüglich einer parallel zur (Dreh-) Achse verlaufenden Symmetrieachse ist.

Gemäß einer weiteren Ausgestaltung der Erfindung weisen die vier Leiterbahnabschnitte in Messrichtung eine Breite von weniger als 300 $\mu$m auf, insbesondere von weniger als 200 $\mu$m oder von weniger als 150 $\mu$m.

In weiterer Ausgestaltung der Erfindung weisen die Leiterbahngruppen zusätzlich zu den vier Leiterbahnabschnitten jeweils einen fünften Leiterbahnabschnitt, einen sechsten Leiterbahnabschnitt, einen siebten Leiterbahnabschnitt und einen achten Leiterbahnabschnitt auf. Der fünfte Leiterbahnabschnitt und der sechste Leiterbahnabschnitt sind elektrisch miteinander verbunden. Ebenso sind der siebte Leiterbahnabschnitt und der achte Leiterbahnabschnitt elektrisch miteinander verbunden. Innerhalb einer Leiterbahngruppe ist der erste Leiterbahnabschnitt gegenüber dem fünften Leiterbahnabschnitt mit einem Abstand in Messrichtung versetzt angeordnet und der dritte Leiterbahnabschnitt gegenüber dem siebten Leiterbahnabschnitt mit einem Abstand in Messrichtung versetzt angeordnet. Dabei entspricht der jeweilige Abstand dem Mittenabstand geteilt durch eine Natürliche Zahl M grösser oder gleich 6.

Mit Vorteil ist der Abstand zwischen dem ersten Leiterbahnabschnitt und dem fünften Leiterbahnabschnitt gleich groß wie der Abstand zwischen dem dritten Leiterbahnabschnitt und dem siebten Leiterbahnabschnitt.

Insbesondere, wenn die vier Leiterbahnabschnitte auf einer planen Ebene angeordnet sind ist es vorteilhaft, dass die zumindest zwei Empfängerleiterbahnen auf einer planen Ebene angeordnet sind, wobei insbesondere die Ebene der zumindest zwei Empfängerleiterbahnen axial versetzt zur Ebene der vier Leiterbahnabschnitte angeordnet ist.

Vorteilhafte Ausbildungen der Erfindung entnimmt man den abhängigen Ansprüchen.

Weitere Einzelheiten und Vorteile der erfindungsgemäßen induktiven Winkelmesseinrichtung ergeben sich aus der nachfolgenden Beschreibung mehrerer Ausführungsbeispiele anhand der beiliegenden Figuren.

## KURZE BESCHREIBUNG DER ZEICHNUNGEN

Figur 1     eine Draufsicht auf ein Abtastelement gemäß einem ersten Ausführungsbeispiel,

Figur 2     eine Draufsicht auf ein Skalenelement gemäß dem ersten Ausführungsbeispiel,

Figur 3     eine Detailansicht auf das Skalenelement gemäß dem ersten Ausführungsbeispiel,

Figur 4     eine Detailansicht auf das Skalenelement gemäß einem zweiten Ausführungsbeispiel,

Figur 5     eine Detailansicht auf das Skalenelement gemäß einem dritten Ausführungsbeispiel,

Figur 6     eine Detailansicht auf das Skalenelement gemäß einem vierten Ausführungsbeispiel,

Figur 7     eine Draufsicht auf ein Abtastelement gemäß einem fünften Ausführungsbeispiel,

Figur 8     eine Draufsicht auf ein Skalenelement gemäß dem fünften Ausführungsbeispiel.

## BESCHREIBUNG DER AUSFÜHRUNGSFORMEN

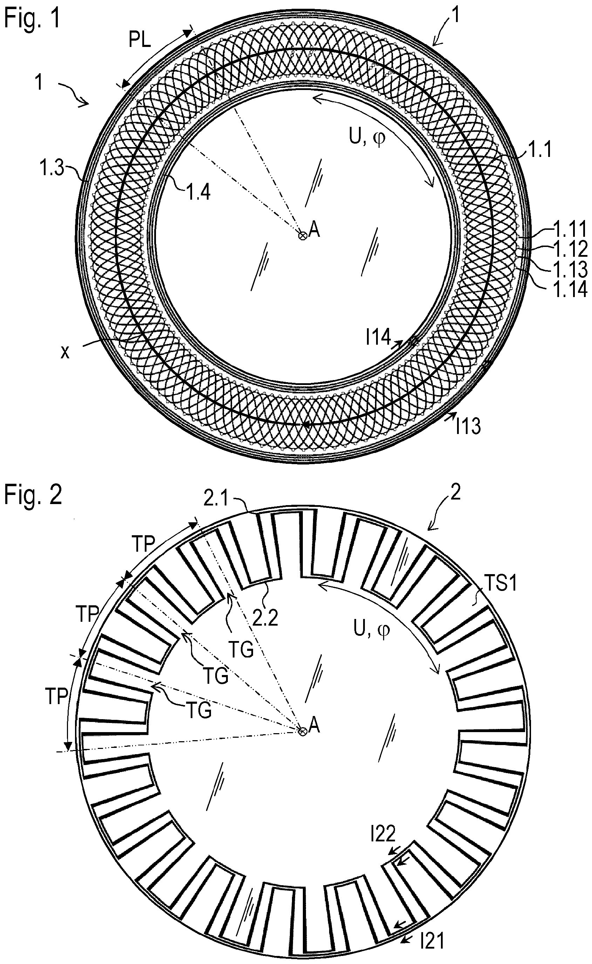

Die Erfindung wird anhand einer Winkelmesseinrichtung beschrieben, welche zur Erfassung einer Winkelposition φ zwischen einem Abtastelement 1 (Figur 1) und einem relativ um eine Achse A drehbaren Skalenelement 2 (Figur 2) beziehungsweise einer Skala bestimmt ist, wobei die Achse A in den Figuren orthogonal zur jeweiligen Zeichenebene orientiert ist. Somit kann als eine Messrichtung U die Umfangsrichtung definiert werden.

Das Abtastelement 1 ist als eine Leiterplatte, welche mehrere Lagen aufweist, ausgeführt und dient zur Abtastung des Skalenelements 2. Das in der Figur 1 gezeigte Abtastelement 1 weist vier Empfängerleiterbahnen 1.11, 1.12, 1.13, 1.14, die in einer Empfängerspur 1.1 angeordnet sind, sowie Erregerspuren 1.3, 1.4 auf. Insbesondere sind die Empfängerleiterbahnen 1.11, 1.12, 1.13, 1.14 radial zwischen den Erregerspuren 1.3, 1.4 angeordnet. Zudem verlaufen die Empfängerleiterbahnen 1.11, 1.12, 1.13, 1.14 auf unterschiedlichen Ebenen mit Durchkontaktierungen, so dass an Kreuzungspunkten unerwünschte Kurzschlüsse vermieden werden. Im gezeigten Ausführungsbeispiel sind zumindest zwei Lagen in dem Leiterplattenaufbau vorgesehen. Die Empfängerleiterbahnen 1.11, 1.12, 1.13, 1.14 weisen einen räumlich periodischen Verlauf auf, der im Wesentlichen sinusförmig beziehungsweise sinusartig ausgestaltet ist. Dabei verläuft die Abszisse x (angedeutet durch den Pfeil auf den Empfängerleiterbahnen 1.11, 1.12, 1.13, 1.14 Figur 1) der zugehörigen Sinus-Linien entlang einer Kreislinie um die Achse A. Im vorgestellten Ausführungsbeispiel durchläuft jede der Empfängerleiterbahnen 1.11, 1.12, 1.13, 1.14 sechzehn volle Sinusperioden (16·2π oder 16·360°) beziehungsweise hat die umlaufende Abszisse x ein Länge von 16·2π oder 16 360° beziehungsweise 16 PL. Die Empfängerleiterbahnen 1.11, 1.12, 1.13, 1.14 sind relativ zueinander entlang der Messrichtung U versetzt. Im vorgestellten Ausführungsbeispiel sind benachbarte Empfängerleiterbahnen 1.11, 1.12, 1.13, 1.14 um 1/8 der vollen Sinusperiode (um π/4 oder 45° bezogen auf die Abszisse x) zueinander versetzt angeordnet. Die Empfängerleiterbahnen 1.11, 1.12, 1.13, 1.14 sind elektrisch so verschaltet, dass diese letztlich um 90° phasenversetzte Signale liefern können. Im vorgestellten Ausführungsbeispiel weisen die Empfängerleiterbahnen 1.11, 1.12, 1.13, 1.14 entlang der Kreislinie jeweils sechzehn Perioden auf, so dass jede der Empfängerleiterbahnen 1.11, 1.12, 1.13, 1.14 eine Periodenlänge PL von 22,5° aufweist. Im Folgenden werden Längengrößen in Umfangs- beziehungsweise Messrichtung U durch Winkelmaße angegeben.

In der Figur 2 ist das Skalenelement 2 in einer Draufsicht gezeigt. Das Skalenelement 2 besteht aus einem Substrat, welches im dargestellten Ausführungsbeispiel aus Epoxydharz hergestellt ist und auf dem in einer Teilungsspur TS1 eine erste Leiterbahn 2.1 und eine zweite Leiterbahn 2.2 angeordnet sind. Als Material für die erste Leiterbahn 2.1 und die zweite Leiterbahn 2.2 wurde im gezeigten Beispiel Kupfer auf das Substrat aufgebracht. Die Leiterbahn 2.1 und die zweite Leiterbahn 2.2 weisen jeweils eine Breite von 150 μm auf.

Die Teilungsspur TS1 ist bezüglich der Achse A zentrisch und um die Achse A in Messrichtung U umlaufend angeordnet. Die erste Leiterbahn 2.1 und die zweite Leiterbahn 2.2 weisen einen mäanderförmigen Verlauf auf und sind endlos.

Die Teilungsspur TS1 kann (beziehungsweise die zugehörige erste Leiterbahn 2.1 und zweite Leiterbahn 2.2 können) in so genannte Leiterbahngruppen TG unterteilt werden. Im vorgestellten Ausführungsbeispiel umfasst die Teilungsspur TS1 insgesamt sechzehn Leiterbahngruppen TG, deren Mittenabstand TP 22,5° (360°/16) beträgt beziehungsweise im Bogenmaß 0,39 (2π/16). Somit entspricht im vorgestellten Ausführungsbeispiel der Mittenabstand TP auf dem Skalenelement 2 der Periodenlänge PL auf dem Abtastelement 1:

$$PL = TP$$

Leiterbahngruppen TG sind Abschnitte auf der Teilungsspur TS1, die sich über einen winkelmäßigen Abstand, der dem Mittenabstand TP entspricht, erstrecken. In benachbarten Leiterbahngruppen TG sind die Verläufe der ersten Leiterbahn 2.1 und der zweiten Leiterbahn 2.2 deckungsgleich, wenn eine der Leiterbahngruppen TG um die Achse A mit einem Betrag entsprechend dem Mittenabstand TP gedreht wird.

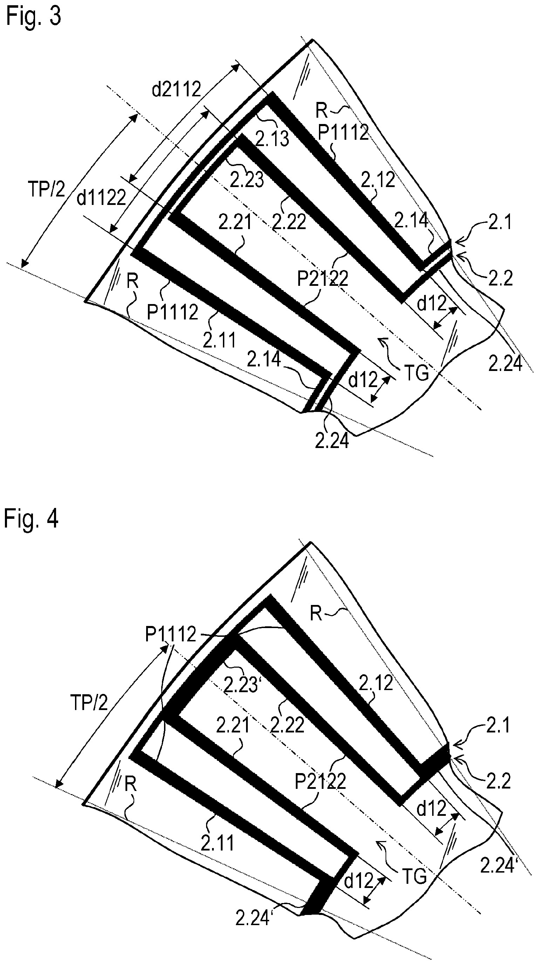

In der Figur 3 ist eine Leiterbahngruppe TG im Detail gezeigt. Eine Leiterbahngruppe TG erstreckt sich in Umfangsrichtung zwischen den radialen Linien R, deren Abstand ebenfalls 22,5° (2·TP/2) beträgt. Derartige Leiterbahngruppen TG weisen im vorgestellten Ausführungsbeispiel einen ersten Leiterbahnabschnitt 2.11, einen zweiten Leiterbahnabschnitt 2.12, einen dritten Leiterbahnabschnitt 2.21 und einen vierten Leiterbahnabschnitt 2.22 auf, wobei sich die vier Leiterbahnabschnitte 2.11, 2.12; 2.21, 2.22 quer zur Messrichtung U, also bezogen auf die Achse A in radialer Richtung erstrecken und jeweils eine Breite von 150 μm aufweisen. In der Figur 3 sind die Leiterbahnabschnitte 2.11, 2.12; 2.21, 2.22 bezüglich ihrer Breite leicht konisch mit abnehmender Breite zur Achse A hin dargestellt. Bei dieser Konfiguration bezieht sich die Breite von 150 μm auf die maximale Breite der Leiterbahnabschnitte 2.11, 2.12; 2.21, 2.22. Die vier Leiterbahnabschnitte 2.11, 2.12; 2.21, 2.22 können zwei Leiterbahnabschnittspaaren P1112, P2122 zugeordnet werden. Somit weist die erste Leiterbahn 2.1 zwei radiale Leiterbahnabschnitte 2.11, 2.12 auf, nämlich den ersten Leiterbahnabschnitt 2.11 und den zweiten Leiterbahnabschnitt 2.12, die dem Leiterbahnabschnittspaar P1112 zugeordnet sind. Die zweite Leiterbahn 2.2 weist zwei radiale Leiterbahnabschnitte 2.21, 2.22 auf (hier der dritte Leiterbahnabschnitt 2.21 und der vierte Leiterbahnabschnitt 2.22), die dem Leiterbahnabschnittspaar P2122 zugeordnet sind. Weiterhin weisen die erste Leiterbahn 2.1 und die zweite Leiterbahn 2.2 Verbindungsleiterbahnabschnitte 2.13, 2.14, 2.23, 2.24 auf, die im vorgestellten Ausführungsbeispiel in Umfangs- beziehungsweise in Messrichtung U verlaufen und die radialen Leiterbahnabschnitte 2.21, 2.22 innerhalb eines Leiterbahnabschnittspaares P1112, P2122 elektrisch miteinander verbinden. Insbesondere umfasst die erste Leiterbahn 2.1 einen ersten Verbindungsleiterbahnabschnitt 2.13 und einen zweiten Verbindungsleiterbahnabschnitt 2.14, so dass der erste Leiterbahnabschnitt 2.11 und der zweite Leiterbahnabschnitt 2.12 durch den ersten und zweiten Verbindungsleiterbahnabschnitt 2.13, 2.14 seriell elektrisch miteinander verbunden sind. Ebenso umfasst die zweite Leiterbahn 2.2 einen dritten Verbindungsleiterbahnabschnitt 2.23 und einen vierten Verbindungsleiterbahnabschnitt 2.24. Durch den dritten Verbindungsleiterbahnabschnitt 2.23 und den vierten Verbindungsleiterbahnabschnitt 2.24 sind der dritte Leiterbahnabschnitt 2.21 und der vierte Leiterbahnabschnitt 2.22 seriell elektrisch miteinander verbunden.

Die Teilungsspur TS1 besteht also aus einer periodischen Abfolge elektrisch leitfähiger Leiterbahnabschnitte 2.11, 2.12; 2.21, 2.22 zwischen welchen nichtleitfähige Teilungsbereiche angeordnet sind. Die Leiterbahnabschnitte 2.11, 2.12; 2.21, 2.22, die zu ein und derselben Leiterbahn 2.1, 2.2 gehören, sind in Reihe geschaltet miteinander elektrisch verbunden.

Diejenigen radialen Leiterbahnabschnitte 2.11, 2.12; 2.21, 2.22, welche zu unterschiedlichen Leiterbahnabschnittspaaren P1112, P2122 gehören, sind jeweils mit einem Abstand d12 in Umfangsrichtung versetzt angeordnet. Demnach sind also jeweils die unmittelbar benachbarten zwei radialen Leiterbahnabschnitte 2.11, 2.12 der ersten Leiterbahn 2.1 mit einem Abstand d12 in Umfangsrichtung zu den zwei radialen Leiterbahnabschnitten 2.21, 2.22 der zweiten Leiterbahn 2.2 versetzt angeordnet. Innerhalb einer Leiterbahngruppe TG sind also der erste Leiterbahnabschnitt 2.11 gegenüber dem dritten Leiterbahnabschnitt 2.21 und der vierte Leiterbahnabschnitt 2.22 gegenüber dem zweiten Leiterbahnabschnitt 2.12 jeweils mit einem Abstand d12 in Messrichtung U versetzt angeordnet. Der Abstand d12 beträgt im vorgestellten Ausführungsbeispiel 1/6 TP. Somit gilt, dass der Abstand d12 dem Mittenabstand TP geteilt durch eine Natürliche Zahl M, hier M = 6, entspricht:

$$d12 = TP/6$$

Der erste Leiterbahnabschnitt 2.11 der ersten Leiterbahn 2.1 ist gegenüber dem vierten Leiterbahnabschnitt 2.22, der nicht unmittelbar benachbart zum ersten Leiterbahnabschnitt 2.11 angeordnet ist und zur zweiten Leiterbahn 2.2 gehört, mit einem Abstand d1122 in Messrichtung U versetzt angeordnet. Ebenso ist der zweite Leiterbahnabschnitt 2.21 der zweiten Leiterbahn 2.2 gegenüber dem dritten Leiterbahnabschnitt 2.13, der nicht unmittelbar benachbart zum zweiten Leiterbahnabschnitt 2.21 angeordnet ist und zur ersten Leiterbahn 2.1 gehört, mit einem Abstand d2112 in Messrichtung U versetzt angeordnet. Dabei gilt, dass sowohl der Abstand d1122 als auch der Abstand d2112 dem halben Mittenabstand TP entspricht:

$$d1122 = d2112 = TP/2$$

Zwischen den radialen Linien R sind die Leiterbahnabschnitte 2.11, 2.12; 2.21, 2.22 achsensymmetrisch bezüglich der mittigen radial verlaufenden Symmetrieachse angeordnet. Ebenso sind die Verbindungsleiterbahnabschnitte 2.13, 2.14, 2.23, 2.24 achsensymmetrisch zwischen den radialen Linien R angeordnet.

Im zusammengebauten Zustand stehen sich das Abtastelement 1 und das Skalenelement 2 axial gegenüber, so dass die Achse A durch die Mittelpunkte beider Elemente verläuft und bei einer Relativdrehung zwischen dem Skalenelement 2 und dem Abtastelement 1 in den Empfängerleiterbahnen 1.11, 1.12, 1.13, 1.14 ein von der jeweiligen Winkelposition abhängiges Signal durch Induktionseffekte erzeugbar ist. Voraussetzung für die Bildung von entsprechenden Signalen ist, dass die Erregerspuren 1.3, 1.4 ein zeitlich wechselndes elektromagnetisches Erregerfeld im Bereich der abgetasteten Teilungsspur TS1 erzeugen. Im dargestellten Ausführungsbeispiel sind die Erregerspuren 1.3, 1.4 als mehrere planar-parallele stromdurchflossene Einzel-Leiterbahnen ausgebildet. Das Abtastelement 1 weist eine elektronische Schaltung, die beispielsweise einen ASIC-Baustein umfasst, auf. Diese elektronische Schaltung des Abtastelements 1 arbeitet nicht nur als Auswerteelement, sondern auch als Erregerkontrollelement, unter dessen Kontrolle der Erregerstrom, welcher dann durch die Erregerspuren 1.3, 1.4 beziehungsweise durch die Einzel-Leiterbahnen fließt, erzeugt wird. Somit werden beide Erregerspuren 1.3, 1.4 durch ein und dasselbe Erregerkontrollelement bestromt.

Werden die Erregerspuren 1.3, 1.4 allesamt in der gleichen Richtung von einem Erregerstrom durchflossen, so bildet sich um die jeweilige Erregerspur 1.3, 1.4 ein schlauch- bzw. zylinderförmig orientiertes elektromagnetisches Feld aus. Die Feldlinien des resultierenden elektromagnetischen Feldes verlaufen in Form konzentrischer Kreise um die Erregerspuren 1.3, 1.4, wobei die Richtung der Feldlinien in bekannter Art und Weise von der Stromrichtung in den Erregerspuren 1.3, 1.4 abhängt. Die Stromrichtung I13, I14 (Figur 1) der Erregerspuren 1.3, 1.4 beziehungsweise die entsprechende Verschaltung der Erregerspuren 1.3, 1.4 ist dabei gleichsinnig zu wählen, so dass die Feldlinien im Bereich der Empfängerspur 1.1 gegenläufig orientiert sind. Durch den Stromfluss in den Erregerspuren 1.3, 1.4 wird in der ersten Leiterbahn 2.1 und in der zweiten Leiterbahn 2.2 des Skalenelementes 2 jeweils ein Strom induziert, wobei die induzierten Ströme jeweils eine Stromrichtung I21, I22 (Figur 2) aufweisen. Die Stromrichtung I21 in der ersten Leiterbahn 2.1 und die Stromrichtung I22 in der zweiten Leiterbahn 2.2 des Skalenelementes 2 verlaufen parallel zueinander (nicht gegensinnig beziehungsweise antiparallel). Die Betrachtungen im Zusammenhang mit den Stromrichtungen I13, I14; I21, I22 gelten nur für ein und denselben Zeitpunkt, da der Erregerstrom ein Wechselstrom ist.

Die erste Leiterbahn 2.1 und die zweite Leiterbahn 2.2 verlaufen mäanderförmig und ineinander geschachtelt. Insbesondere die Dimensionierung der Abstände d12, d1122, d2112 zwischen den betreffenden Leiterbahnabschnitten 2.11, 2.12; 2.21, 2.22 hat in Verbindung mit dem sinusförmigen Verlauf der Empfängerleiterbahnen 1.11, 1.12, 1.13, 1.14 zur Folge, dass im vorgestellten Ausführungsbeispiel die von den Empfängerleiterbahnen 1.11, 1.12, 1.13, 1.14 erzeugten Signale nahezu keine dritte Harmonische (Oberwelle) sowie praktisch keine geradzahligen Harmonischen aufweisen. Dadurch werden für die Bestimmung der Winkelpositionswerte Interpolationsfehler minimiert.

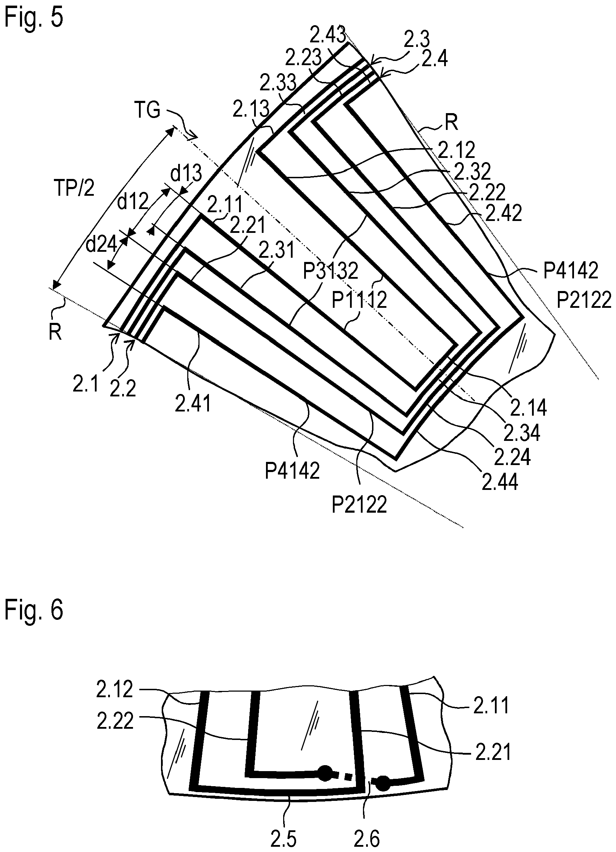

Anhand der Figur 4 wird eine weitere Ausführungsform (zweites Ausführungsbeispiel) der Erfindung beschrieben. Diese unterscheidet sich vom ersten Ausführungsbeispiel im Wesentlichen dadurch, dass statt den Verbindungsleiterbahnabschnitten 2.13, 2.14, 2.23, 2.24 (Figur 3) mit jeweils parallelem Verlauf nunmehr einteilige Verbindungsleiterbahnabschnitte 2.23', 2.24' vorgesehen sind, durch die der gesamte induzierte Strom fließen kann. Gemäß einem dritten Ausführungsbeispiel nach Figur 5 kann die Teilungsspur TS1 neben der ersten Leiterbahn 2.1 und der zweiten Leiterbahn 2.2 auch eine dritte Leiterbahn 2.3 und eine vierte Leiterbahn 2.4 umfassen. Dementsprechend liegen in diesem Ausführungsbeispiel acht Leiterbahnabschnitte 2.11, 2.12; 2.21, 2.22; 2.31, 2.32; 2.41, 2.42 vor, die sich quer zur Messrichtung U, beziehungsweise bezogen auf die Achse A in radialer Richtung erstrecken. Demnach weisen hier die Leiterbahngruppen TG zusätzlich jeweils einen fünften Leiterbahnabschnitt 2.31, einen sechsten Leiterbahnabschnitt 2.32, einen siebten Leiterbahnabschnitt 2.41 und einen achten Leiterbahnabschnitt 2.42 auf.

Dabei ist innerhalb einer Leiterbahngruppe TG der erste Leiterbahnabschnitt 2.11 gegenüber dem fünften Leiterbahnabschnitt 2.31 mit einem Abstand d13 in Messrichtung U versetzt angeordnet. Zudem ist der dritte Leiterbahnabschnitt 2.21 gegenüber dem siebten Leiterbahnabschnitt 2.41 mit einem Abstand d24 in Messrichtung U versetzt angeordnet.

Auch die gegenüber dem ersten Ausführungsbeispiel gemäß der Figur 3 hinzugenommen Leiterbahnabschnitte 2.31, 2.32; 2.41, 2.42 können zwei Leiterbahnabschnittspaaren P3132, P4142 zugeordnet werden. Somit weist die dritte Leiterbahn 2.3 zwei radiale Leiterbahnabschnitte 2.31, 2.32 auf, die dem Leiterbahnabschnittspaar P3132 zugeordnet sind und die vierte Leiterbahn 2.4 weist zwei radiale Leiterbahnabschnitte 2.41, 2.42 auf, die dem Leiterbahnabschnittspaar P4142 zugeordnet sind. Weiterhin weisen auch die dritte Leiterbahn 2.3 und die vierte Leiterbahn 2.4 Verbindungsleiterbahnabschnitte 2.33, 2.34, 2.43, 2.44 auf, die im vorgestellten Ausführungsbeispiel in Umfangsrichtung verlaufen und die radialen Leiterbahnabschnitte 2.31, 2.32; 2.41, 2.42 innerhalb eines Leiterbahnabschnittspaares P3132, P4142 elektrisch miteinander verbinden. Die Teilungsspur TS1 besteht also auch in diesem Ausführungsbeispiel aus einer periodischen Abfolge elektrisch leitfähiger Leiterbahnabschnitte 2.11, 2.12; 2.21, 2.22; 2.31, 2.32; 2.41, 2.42 zwischen welchen nichtleitfähige Teilungsbereiche angeordnet sind. Der Abstand d12 zwischen den Leiterbahnabschnitten 2.11, 2.21 beziehungsweise zwischen den Leiterbahnabschnitten 2.12, 2.22 der ersten Leiterbahn 2.1 und der zweiten Leiterbahn 2.2 beträgt auch in diesem Ausführungsbeispiel 1/6 TP (Natürliche Zahl M = 6). Somit gilt:

$$d12 = TP/6$$

Weiterhin beträgt der Abstand d13 zwischen den Leiterbahnabschnitten 2.11, 2.31 beziehungsweise zwischen den Leiterbahnabschnitten 2.12, 2.32 der ersten Leiterbahn 2.1 beziehungsweise der dritten Leiterbahn 2.3 1/10 TP (Natürliche Zahl M = 10), so dass gilt:

$$d13 = TP/10$$

Außerdem gilt, dass d24 = d13, also

$$d24 = TP/10$$

beträgt.

Zudem weisen auch im dritten Ausführungsbeispiel zwei nicht unmittelbar benachbarte Leiterbahnabschnitte 2.11, 2.12; 2.21, 2.22; 2.31, 2.32; 2.41, 2.42 einer Leiterbahngruppe TG jeweils einen Abstand auf, der dem halben Mittenabstand TP entspricht.

Der fünfte Leiterbahnabschnitt 2.31 der dritten Leiterbahn 2.3 ist gegenüber dem vierten Leiterbahnabschnitt 2.22, der nicht unmittelbar benachbart zum dritten Leiterbahnabschnitt 2.31 angeordnet ist und zur zweiten Leiterbahn 2.2 gehört, mit einem Abstand TP/2 in Messrichtung U versetzt angeordnet. Gleiches gilt beispielsweise auch für den zweiten Leiterbahnabschnitt 2.12 und den siebten Leiterbahnabschnitt 2.41 (Abstand TP/2).

Sämtliche Leiterbahnen 2.1 bis 2.4 verlaufen mäanderförmig und sind ineinander geschachtelt. Im vorgestellten Ausführungsbeispiel wird nicht nur die dritte Harmonische aus den von den Empfängerleiterbahnen 1.11, 1.12, 1.13, 1.14 erzeugten Signalen gefiltert, sondern auch die fünfte Harmonische sowie alle geradzahligen Harmonischen.

In der Figur 6 ist eine alternative Ausgestaltung des Abtastelements 1 (viertes Ausführungsbeispiel) dargestellt. Dort sind ähnlich wie im ersten Ausführungsbeispiel zwei Leiterbahnen 2.1, 2.2 vorgesehen, wobei nun die erste Leiterbahn 2.1 und die zweite Leiterbahn 2.2 nicht als elektrisch voneinander getrennte Leiter ausgestaltet sind, also nicht elektrisch rein parallel angeordnet, sondern in Serie verschaltet sind. Zu diesem Zweck sind auf zwei Ebenen beziehungsweise mit Hilfe einer zweiten Kupferlage der Leiterplatte des Abtastelements 1 Verbindungsleiterbahnen 2.5, 2.6 angeordnet. Diese verbinden die beiden Leiterbahnen 2.1, 2.2 mit Hilfe von Micro-Vias so, dass diese seriell miteinander verbunden sind. Diese Anordnung hat insbesondere den Vorteil, dass verhindert wird, dass in den Leiterbahnen 2.1, 2.2 unterschiedliche Ströme fließen können. Ein derartiger Effekt (unterschiedlich große Ströme) könnte zu einer eingeschränkten Oberwellenfilterung beziehungsweise Filterung der Harmonischen führen.

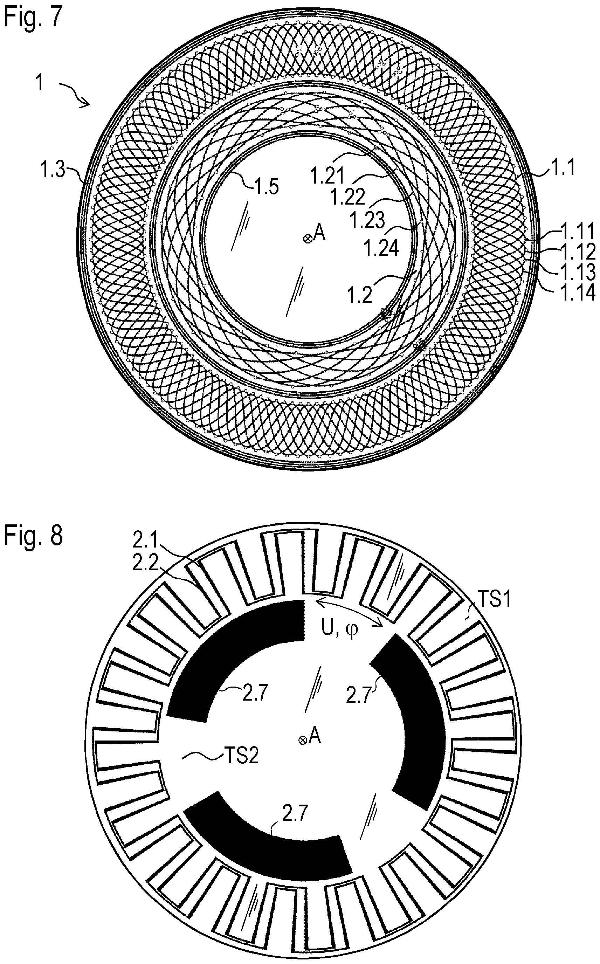

Ein fünftes Ausführungsbeispiel ist in den Figuren 7 und 8 gezeigt. Gemäß der Figur 7 umfasst nun das Abtastelement 1 zusätzlich noch eine weitere innere Empfängerspur 1.2, welche vier Empfängerleiterbahnen 1.21, 1.22, 1.23, 1.24 umfasst. Die Empfängerleiterbahnen 1.21, 1.22, 1.23, 1.24 weisen einen räumlich periodischen Verlauf auf, der im Wesentlichen sinusförmig beziehungsweise sinusartig ausgestaltet ist, wobei die Abszisse der Sinus-Linien entlang einer Kreislinie um die Achse A verläuft. Die Empfängerleiterbahnen 1.21, 1.22, 1.23, 1.24 sind analog zum ersten Ausführungsbeispiel angeordnet, also relativ zueinander um 45° versetzt, so dass diese bei entsprechender elektrischer Verschaltung um 90° phasenversetzte Signale liefern können. Die Empfängerleiterbahnen 1.21, 1.22, 1.23, 1.24 der inneren Empfängerspur 1.2 weisen entlang der Kreislinie jeweils drei Perioden auf.

Außerdem umfasst das Abtastelement 1 gemäß dem fünften Ausführungsbeispiel eine weitere Erregerspur 1.5, die mehrere Erregerleitungen beziehungsweise Erregerleiterbahnen umfasst. Die Stromrichtung der Erregerspur 1.5 ist bezogen auf die Stromrichtung der Erregerspuren 1.3, 1.4 gegensinnig zu wählen.

Wie in der Figur 8 dargestellt umfasst das Skalenelement 1 gemäß dem fünften Ausführungsbeispiel eine weitere innere Teilungsspur TS2. Die innere Teilungsspur TS2 besteht in der dargestellten Ausführungsform aus Teilungsbereichen 2.7, in denen elektrisch leitfähiges Material, hier Kupfer aufgebracht ist. Zwischen den Teilungsbereichen 2.7 ist kein leitfähiges Material angeordnet.

Durch die Empfängerspur 1.1 sind vergleichsweise hoch aufgelöste Winkelpositionswerte für die relative Winkelposition erzeugbar, während durch die weitere Empfängerspur 1.2 vergleichsweise grobe Winkelpositionswerte erzeugbar sind. In einer elektronischen Schaltung wird der Anschluss der feinen Winkelpositionswerte mit den vergleichsweise groben Winkelpositionswerten vorgenommen, so dass im Ergebnis ein hochauflösender absoluter Winkelpositionswert von der Schaltung erzeugt wird.

## Patentansprüche

1. Induktive Winkelmesseinrichtung, die ein Abtastelement (1) und ein Skalenelement (2) aufweist, wobei

- das Skalenelement (2) eine um eine Achse (A) umlaufende Teilungsspur (TS1) umfasst, wobei die Teilungsspur (TS1) mehrere Leiterbahngruppen (TG) aufweist, welche elektrisch verbunden sind und in Messrichtung (U) so aneinandergereiht angeordnet sind, dass benachbarte Leiterbahngruppen (TG) in Messrichtung (U) einen Mittenabstand (TP) aufweisen, wobei

> die Leiterbahngruppen (TG) jeweils einen ersten Leiterbahnabschnitt (2.11), einen zweiten Leiterbahnabschnitt (2.12), einen dritten Leiterbahnabschnitt (2.21) und einen vierten Leiterbahnabschnitt (2.22) aufweisen, wobei sich diese Leiterbahnabschnitte (2.11, 2.12; 2.21, 2.22) quer zur Messrichtung (U) erstrecken, wobei
> der erste Leiterbahnabschnitt (2.11) und der zweite Leiterbahnabschnitt (2.12) elektrisch miteinander verbunden sind, und
> der dritte Leiterbahnabschnitt (2.21) und der vierte Leiterbahnabschnitt (2.22) elektrisch miteinander verbunden sind, wobei innerhalb einer Leiterbahngruppe (TG)

>> der erste Leiterbahnabschnitt (2.11) gegenüber dem dritten Leiterbahnabschnitt (2.21) und
>> der vierte Leiterbahnabschnitt (2.22) gegenüber dem zweiten Leiterbahnabschnitt (2.12) jeweils mit einem Abstand (d12) in Messrichtung (U) versetzt angeordnet sind, wobei
>> der Abstand (d12) dem Mittenabstand (TP) geteilt durch eine Natürliche Zahl (M) grösser oder gleich 4 entspricht,

- das Abtastelement (1) eine Erregerspur (1.3, 1.4) und eine Empfängerspur (1.1) mit zumindest zwei Empfängerleiterbahnen (1.11, 1.12, 1.13, 1.14) aufweist, wobei die Empfängerleiterbahnen (1.11, 1.12, 1.13, 1.14) einen sinusförmigen Verlauf aufweisen mit einer Periodenlänge (PL), die dem Mittenabstand (TP) entspricht.

2. Induktive Winkelmesseinrichtung gemäß dem Anspruch 1, wobei die Winkelmesseinrichtung so konfiguriert ist, dass das Abtastelement (1) zumindest zwei Erregerspuren (1.3, 1.4) aufweist, welche jeweils mindestens eine Leiterbahn umfassen, wobei die Erregerspuren (1.3, 1.4) in Messrichtung (U) verlaufen und die Empfängerspur (1.1) zwischen den Erregerspuren (1.3, 1.4) angeordnet ist, wobei die Winkelmesseinrichtung weiterhin eine elektronische Schaltung umfasst, durch welche in den Erregerspuren (1.3, 1.4) ein elektrischer Erregerstrom erzeugbar ist.

3. Induktive Winkelmesseinrichtung gemäß dem Anspruch 2, wobei zu einem bestimmten Zeitpunkt der Erregerstrom in den zumindest zwei Erregerspuren (1.3, 1.4) in gleicher Richtung verläuft.

4. Induktive Winkelmesseinrichtung gemäß einem der vorhergehenden Ansprüche, wobei die Natürliche Zahl (M) grösser oder gleich 6 ist.

5. Induktive Winkelmesseinrichtung gemäß einem der vorhergehenden Ansprüche, wobei die Teilungsspur (TS1) eine Anzahl (N) von Leiterbahngruppen (TG) aufweist und der Mittenabstand (TP) dem Quotienten aus dem Vollwinkel und der Anzahl (N) von Leiterbahngruppen (TG) entspricht.

6. Induktive Winkelmesseinrichtung gemäß einem der vorhergehenden Ansprüche, wobei der Abstand (d1122, d 2112) in Messrichtung (U) zwischen zwei nicht unmittelbar benachbarten Leiterbahnabschnitten (2.11, 2.12; 2.21, 2.22) einer Leiterbahngruppe (TG) dem halben Mittenabstand (TP) entspricht.

7. Induktive Winkelmesseinrichtung gemäß einem der vorhergehenden Ansprüche, wobei

> der erste Leiterbahnabschnitt (2.11) und der zweite Leiterbahnabschnitt (2.12) sowie ein erster Verbindungsleiterbahnabschnitt (2.13, 2.23') und ein zweiter Verbindungsleiterbahnabschnitt (2.14, 2.24') Abschnitte einer ersten Leiterbahn (2.1) sind, wobei der erste Leiterbahnabschnitt (2.11) und der zweite Leiterbahnabschnitt (2.12) durch den ersten Verbindungsleiterbahnabschnitt (2.13, 2.23') und den zweiten Verbindungsleiterbahnabschnitt (2.14, 2.24') seriell elektrisch miteinander verbunden sind und
> der dritte Leiterbahnabschnitt (2.21) und der vierte Leiterbahnabschnitt (2.22) sowie ein dritter Verbindungsleiterbahnabschnitt (2.23, 2.23') und ein vierter Verbindungsleiterbahnabschnitt (2.24, 2.24') Abschnitte einer zweiten Leiterbahn (2.2) sind, wobei der dritte Leiterbahnabschnitt (2.21) und der vierte Leiterbahnabschnitt (2.22) durch den dritten Verbindungsleiterbahnabschnitt (2.23, 2.23') und den vierten Verbindungsleiterbahnabschnitt (2.24, 2.24') seriell elektrisch miteinander verbunden sind.

8. Induktive Winkelmesseinrichtung gemäß einem der vorhergehenden Ansprüche, wobei

> der erste Leiterbahnabschnitt (2.11) und der zweite Leiterbahnabschnitt (2.12) sowie ein erster Verbindungsleiterbahnabschnitt (2.13, 2.23') und ein zweiter Verbindungsleiterbahnabschnitt (2.14, 2.24') Abschnitte einer ersten Leiterbahn (2.1) sind, wobei der erste Leiterbahnabschnitt (2.11) und der zweite Leiterbahnabschnitt (2.12) durch den ersten Verbindungsleiterbahnschnitt (2.13, 2.23') und den zweiten Verbindungsleiterbahnabschnitt (2.14, 2.24') seriell elektrisch miteinander verbunden sind und sich die Verbindungsleiterbahnabschnitte (2.13, 2.14, 2.23, 2.24; 2.23', 2.24') in einer Richtung mit einer Richtungskomponente parallel zur Messrichtung (U) erstrecken.

9. Induktive Winkelmesseinrichtung gemäß einem der vorhergehenden Ansprüche, wobei

der erste Leiterbahnabschnitt (2.11) und der zweite Leiterbahnabschnitt (2.12) sowie ein erster Verbindungsleiterbahnschnitt (2.13, 2.23') und ein zweiter Verbindungsleiterbahnabschnitt (2.14, 2.24') Abschnitte einer ersten Leiterbahn (2.1) sind, wobei der erste Leiterbahnabschnitt (2.11) und der zweite Leiterbahnabschnitt (2.12) durch den ersten Verbindungsleiterbahnschnitt (2.13, 2.23') und den zweiten Verbindungsleiterbahnabschnitt (2.14, 2.24') seriell elektrisch miteinander verbunden sind und die Verbindungsleiterbahnabschnitte (2.13, 2.14, 2.23, 2.24; 2.23', 2.24') in Messrichtung (U) bezüglich der Leiterbahnabschnitte (2.11, 2.12; 2.21, 2.22) abwechselnd radial innen und radial außen angeordnet sind.

10. Induktive Winkelmesseinrichtung gemäß einem der vorhergehenden Ansprüche, wobei vier Leiterbahnabschnitte (2.11, 2.12; 2.21, 2.22) in Messrichtung (U) ein Breite von weniger als 300 µm aufweisen, insbesondere von weniger als 200 µm aufweisen.

11. Induktive Winkelmesseinrichtung gemäß einem der vorhergehenden Ansprüche, wobei die Leiterbahngruppen (TG) jeweils einen fünften Leiterbahnabschnitt (2.31), einen sechsten Leiterbahnabschnitt (2.32), einen siebten Leiterbahnabschnitt (2.41) und einen achten Leiterbahnabschnitt (2.42) aufweisen, wobei sich diese Leiterbahnabschnitte (2.31, 2.32; 2.41, 2.42) quer zur Messrichtung (U) erstrecken, wobei

der fünfte Leiterbahnabschnitt (2.31) und der sechste Leiterbahnabschnitt (2.32) elektrisch miteinander verbunden sind, und der siebte Leiterbahnabschnitt (2.41) und der achte Leiterbahnabschnitt (2.42) elektrisch miteinander verbunden sind, wobei innerhalb einer Leiterbahngruppe (TG)

der erste Leiterbahnabschnitt (2.11) gegenüber dem fünften Leiterbahnabschnitt (2.31) mit einem Abstand (d13) in Messrichtung (U) versetzt angeordnet ist und

der dritte Leiterbahnabschnitt (2.21) gegenüber dem siebten Leiterbahnabschnitt (2.41) mit einem Abstand (d24) in Messrichtung (U) versetzt angeordnet ist, wobei der jeweilige Abstand (d13, d24) dem Mittenabstand (TP) geteilt durch eine Natürliche Zahl (M) grösser oder gleich 6 entspricht.

12. Induktive Winkelmesseinrichtung gemäß dem Anspruch 11, wobei der Abstand (d13) zwischen dem ersten Leiterbahnabschnitt (2.11) und dem fünften Leiterbahnabschnitt (2.31) gleich groß ist wie der Abstand (d24) zwischen dem dritten Leiterbahnabschnitt (2.21) und dem siebten Leiterbahnabschnitt (2.41).

## Claims

1. Inductive angle measuring device which comprises a scanning element (1) and a scale element (2), wherein

- the scale element (2) comprises a graduation track (TS1) extending around an axis (A), wherein the graduation track (TS1) has a plurality of conductor track groups (TG) which are electrically connected and are arranged one after the other in the measuring direction (U) such that adjacent conductor track groups (TG) have a centre-to-centre distance (TP) in the measuring direction (U), wherein the conductor track groups (TG) each have a first conductor track section (2.11), a second conductor track section (2.12), a third conductor track section (2.21) and a fourth conductor track section (2.22), these conductor track sections (2.11, 2.12; 2.21, 2.22) extending transversely to the measuring direction (U), wherein

the first conductor track section (2.11) and the second conductor track section (2.12) are electrically connected to one another, and the third conductor track section (2.21) and the fourth conductor track section (2.22) are electrically connected to one another, wherein, within one conductor track group (TG),

the first conductor track section (2.11) is arranged offset in relation to the third conductor track section (2.21) and the fourth conductor track section (2.22) is arranged offset in relation to the second conductor track section (2.12),

in each case at a distance (d12) in the measuring direction (U), wherein the distance (d12) corresponds to the centre-to-centre distance (TP) divided by a natural number (M) of greater than or equal to 4,

- the scanning element (1) has an exciter track (1.3, 1.4) and a receiver track (1.1) with at least two receiver conductor tracks (1.11, 1.12, 1.13, 1.14), wherein the receiver conductor tracks (1.11, 1.12, 1.13, 1.14) have a sinusoidal profile with a period length (PL) that corresponds to the centre-to-centre distance (TP).

2. Inductive angle measuring device according to Claim 1, wherein the angle measuring device is configured such that the scanning element (1) has at least two exciter tracks (1.3, 1.4), each of which comprises at least one conductor track, wherein the exciter tracks (1.3, 1.4) run in the measuring direction (U) and the receiver track (1.1) is arranged between the exciter tracks (1.3, 1.4), wherein the angle measuring device further comprises an electronic circuit by means of which an electric exciter current can be generated in the exciter tracks (1.3, 1.4).

3. Inductive angle measuring device according to Claim 2, wherein the exciter current runs in the same direction in the at least two exciter tracks (1.3, 1.4) at a specific time.

4. Inductive angle measuring device according to one of the preceding claims, wherein the natural number (M) is greater than or equal to 6.

5. Inductive angle measuring device according to one of the preceding claims, wherein the graduation track (TS1) has a number (N) of conductor track groups (TG) and the centre-to-centre distance (TP) corresponds to the quotient of the round angle and the number (N) of conductor track groups (TG).

6. Inductive angle measuring device according to one of the preceding claims, wherein the distance (d1122, d2112) in the measuring direction (U) between two conductor track sections (2.11, 2.12; 2.21, 2.22) of one conductor track group (TG) that are not directly adjacent corresponds to half the centre-to-centre distance (TP).

7. Inductive angle measuring device according to one of the preceding claims, wherein

the first conductor track section (2.11) and the second conductor track section (2.12) and also a first connecting conductor track section (2.13, 2.23') and a second connecting conductor track section (2.14, 2.24') are sections of a first conductor track (2.1), the first conductor track section (2.11) and the second conductor track section (2.12) being electrically connected to one another in series by the first connecting conductor track section (2.13, 2.23') and the second connecting conductor track section (2.14, 2.24'), and

the third conductor track section (2.21) and the fourth conductor track section (2.22) and also a third connecting conductor track section (2.23, 2.23') and a fourth connecting conductor track section (2.24, 2.24') are sections of a second conductor track (2.2), the third conductor track section (2.21) and the fourth conductor track section (2.22) being electrically connected to one another in series by the third connecting conductor track section (2.23, 2.23') and the fourth connecting conductor track section (2.24, 2.24').

8. Inductive angle measuring device according to one of the preceding claims, wherein

the first conductor track section (2.11) and the second conductor track section (2.12) and also a first connecting conductor track section (2.13, 2.23') and a second connecting conductor track section (2.14, 2.24') are sections of a first conductor track (2.1), the first conductor track section (2.11) and the second conductor track section (2.12) being electrically connected to one another in series by the first connecting conductor track section (2.13, 2.23') and the second connecting conductor track section (2.14, 2.24'), and

the connecting conductor track sections (2.13, 2.14, 2.23, 2.24; 2.23', 2.24') extend in a direction with a directional component parallel to the measuring direction (U).

9. Inductive angle measuring device according to one of the preceding claims, wherein

the first conductor track section (2.11) and the second conductor track section (2.12) and also a first connecting conductor track section (2.13, 2.23') and a second connecting conductor track section (2.14, 2.24') are sections of a first conductor track (2.1), the first conductor track section (2.11) and the second conductor track section (2.12) being electrically connected to one another in series by the first connecting conductor track section (2.13, 2.23') and the second connecting conductor track section (2.14, 2.24'), and

the connecting conductor track sections (2.13, 2.14, 2.23, 2.24; 2.23', 2.24') are arranged alternately radially on the inside and radially on the outside with respect to the conductor track sections (2.11, 2.12; 2.21, 2.22) in the measuring direction (U).

10. Inductive angle measuring device according to one of the preceding claims, wherein four conductor track sections (2.11, 2.12; 2.21, 2.22) have a width of less than 300 pm, in particular of less than 200 pm, in the measuring direction (U).

11. Inductive angle measuring device according to one of the preceding claims, wherein the conductor track groups (TG) each have a fifth conductor track section (2.31), a sixth conductor track section (2.32), a seventh conductor track section (2.41) and an eighth conductor track section (2.42), these conductor track sections (2.31, 2.32; 2.41, 2.42) extending transversely to the measuring direction (U), wherein

the fifth conductor track section (2.31) and the sixth conductor track section (2.32) are electrically connected to one another, and
the seventh conductor track section (2.41) and the eighth conductor track section (2.42) are electrically connected to one another, wherein, within one conductor track group (TG),

the first conductor track section (2.11) is arranged offset in relation to the fifth conductor track section (2.31) at a distance (d13) in the measuring direction (U), and
the third conductor track section (2.21) is arranged offset in relation to the seventh conductor track section (2.41) at a distance (d24) in the measuring direction (U), wherein the respective distance (d13, d24) corresponds to the centre-to-centre-distance (TP) divided by a natural number (M) of greater than or equal to 6.

12. Inductive angle measuring device according to Claim 11, wherein the distance (d13) between the first conductor track section (2.11) and the fifth conductor track section (2.31) is equal to the distance (d24) between the third conductor track section (2.21) and the seventh conductor track section (2.41).

## Revendications

1. Dispositif de mesure d'angle inductif, qui comporte un élément de balayage (1) et un élément gradué (2),

- l'élément gradué (2) comportant une piste de graduation (TS1) qui s'étend autour d'un axe (A), la piste de graduation (TS1) comportant plusieurs groupes de pistes conductrices (TG) qui sont reliés électriquement et qui sont disposés en ligne dans la direction de mesure (U) de manière à ce que des groupes de pistes conductrices (TG) adjacents soient à une distance de centre à centre (TP) dans la direction de mesure (U),

les groupes de pistes conductrices (TG) comportant chacun une première portion de piste conductrice (2.11), une deuxième portion de piste conductrice (2.12), une troisième portion de piste conductrice (2.21) et une quatrième portion de piste conductrice (2.22), ces portions de pistes conductrices (2.11, 2.12 ; 2.21, 2.22) s'étendant transversalement à la direction de mesure (U),
la première portion de piste conductrice (2.11) et la deuxième portion de piste conductrice (2.12) étant reliées électriquement l'une à l'autre, et
la troisième portion de piste conductrice (2.21) et la quatrième portion de piste conductrice (2.22) étant reliées électriquement l'une à l'autre,
à l'intérieur d'un groupe de pistes conductrices (TG)
la première portion de piste conductrice (2.11) étant disposée de manière décalée par rapport à la troisième portion de piste conductrice (2.21) et la quatrième portion de piste conductrice (2.22) étant disposée de manière décalée par rapport à la deuxième portion de piste conductrice (2.12), à chaque fois à une distance (d12) dans la direction de mesure (U),
la distance (d12) correspondant à la distance centre à centre (TP) divisée par un entier naturel (M) supérieur ou égal à 4,

- l'élément de balayage (1) comportant une piste d'excitation (1.3, 1.4) et une piste de réception (1.1) pourvue d'au moins deux pistes conductrices de réception (1.11, 1.12, 1.13, 1.14), les pistes conductrices de réception (1.11, 1.12, 1.13, 1.14) ayant une allure sinusoïdale d'une longueur de période (PL) qui correspond à la distance centre à centre (TP).

2. Dispositif de mesure d'angle inductif selon la revendication 1, le dispositif de mesure d'angle étant configuré de manière à ce que l'élément de balayage (1) comporte au moins deux pistes d'excitation (1.3, 1.4), qui comprennent chacune au moins une piste conductrice, les pistes d'excitation (1.3, 1.4) s'étendant dans la direction de mesure (U) et la piste de réception (1.1) étant disposée entre les pistes d'excitation (1.3, 1.4), le dispositif de mesure d'angle comprenant en outre un circuit électronique permettant de générer un courant électrique d'excitation dans les pistes d'excitation (1.3, 1.4).

3. Dispositif de mesure d'angle inductif selon la revendication 2, le courant d'excitation dans les au moins deux pistes d'excitation (1.3, 1.4) circulant dans le même sens à un instant déterminé.

4. Dispositif de mesure d'angle inductif selon l'une des revendications précédentes, l'entier naturel (M) étant supérieur ou égal à 6.

5. Dispositif de mesure d'angle inductif selon l'une des revendications précédentes, la piste de graduation (TS1) comportant un certain nombre (N) de groupes de pistes conductrices (TG) et la distance centre à centre (TP) correspondant au quotient de l'angle complet et du nombre (N) de groupes de pistes conductrices (TG).

6. Dispositif de mesure d'angle inductif selon l'une des revendications précédentes, la distance (d1122, d2112) dans la direction de mesure (U) entre deux portions de piste conductrice (2.11, 2.12 ; 2.21, 2.22), qui ne sont pas directement adjacents, d'un groupe de pistes conductrices (TG) correspondant à la moitié de la distance centre à centre (TP).

7. Dispositif de mesure d'angle inductif selon l'une des revendications précédentes, la première portion de piste conductrice (2.11) et la deuxième portion de piste conductrice (2.12) ainsi qu'une première portion de piste conductrice de liaison (2.13, 2.23') et une deuxième portion de piste conductrice de liaison (2.14, 2.24') étant des portions d'une première piste conductrice (2.1), la première portion de piste conductrice (2.11) et la deuxième portion de piste conductrice (2.12) étant reliées électriquement l'une à l'autre en série par la première portion de piste conductrice de liaison (2.13, 2.23') et la deuxième portion de piste conductrice de liaison (2.14, 2.24') et la troisième portion de piste conductrice (2.21) et la quatrième portion de piste conductrice (2.22) ainsi qu'une troisième portion de piste conductrice de liaison (2.23, 2.23') et une quatrième portion de piste conductrice de liaison (2.24, 2.24') étant des portions d'une deuxième piste conductrice (2.2), la troisième portion de piste conductrice (2.21) et la quatrième portion de piste conductrice (2.22) étant reliées électriquement l'une à l'autre en série par la troisième portion de piste conductrice de liaison (2.23, 2.23') et la quatrième portion de piste conductrice de liaison (2.24, 2.24').

8. Dispositif de mesure d'angle inductif selon l'une des revendications précédentes,

la première portion de piste conductrice (2.11) et la deuxième portion de piste conductrice (2.12) ainsi qu'une première portion de piste conductrice de liaison (2.13, 2.23') et une deuxième portion de piste conductrice de liaison (2.14, 2.24') étant des portions d'une première piste conductrice (2.1), la première portion de piste conductrice (2.11) et la deuxième portion de piste conductrice (2.12) étant reliées électriquement l'une à l'autre en série par la première portion de piste conductrice de liaison (2.13, 2.23') et la deuxième portion de piste conductrice de liaison (2.14, 2.24') et
les portions de pistes conductrices de liaison (2.13, 2.14, 2.23, 2.24 ; 2.23', 2.24') s'étendant dans une direction avec une composante directionnelle parallèle à la direction de mesure (U).

9. Dispositif de mesure d'angle inductif selon l'une des revendications précédentes,

la première portion de piste conductrice (2.11) et la deuxième portion de piste conductrice (2.12) ainsi qu'une première portion de piste conductrice de liaison (2.13, 2.23') et une deuxième portion de piste conductrice de liaison (2.14, 2.24') étant des portions d'une première piste conductrice (2.1), la première portion de piste conductrice (2.11) et la deuxième portion de piste conductrice (2.12) étant reliées électriquement l'une à l'autre en série par la première portion de piste conductrice de liaison (2.13, 2.23') et la deuxième portion de piste conductrice de liaison (2.14, 2.24') et
les portions de piste conductrice de liaison (2.13, 2.14, 2.23, 2.24 ; 2.23', 2.24') étant disposés de manière alternée radialement à l'intérieur et radialement à l'extérieur dans la direction de mesure (U) par rapport aux portions de piste conductrice (2.11, 2.12 ; 2.21, 2.22).

10. Dispositif de mesure d'angle inductif selon l'une des revendications précédentes, quatre portions de piste conductrice (2.11, 2.12 ; 2.21, 2.22) ayant une largeur inférieure à 300 $\mu$m, en particulier inférieure à 200 $\mu$m, dans la direction de mesure (U).

11. Dispositif de mesure d'angle inductif selon l'une des revendications précédentes, les groupes de pistes conductrices (TG) comportant chacun une cinquième portion de piste conductrice (2.31), une sixième portion de piste conductrice (2.32), une septième portion de piste conductrice (2.41) et une huitième portion de piste conductrice (2.42), ces portions de piste conductrice (2.31, 2.32 ; 2.41, 2.42) s'étendant transversalement à la direction de mesure (U),

la cinquième portion de piste conductrice (2.31) et la sixième portion de piste conductrice (2.32) étant reliées électriquement l'une à l'autre, et la septième portion de piste conductrice (2.41) et la huitième portion de piste conductrice (2.42) étant reliées électriquement l'une à l'autre, à l'intérieur d'un groupe de pistes conductrices (TG)

la première portion de piste conductrice (2.11) étant disposée de manière décalée par rapport à la cinquième portion de piste conductrice (2.31) d'une distance (d13) dans la direction de mesure (U) et la troisième portion de piste conductrice (2.21) étant disposée de manière décalée par rapport à la septième portion de piste conductrice (2.41) d'une distance (d24) dans la direction de mesure (U), la distance respective (d13, d24) correspondant à la distance centre à centre (TP) divisée par un entier naturel (M) supérieur ou égal à 6.

12. Dispositif de mesure d'angle inductif selon la revendication 11, la distance (d13) entre la première portion de piste conductrice (2.11) et la cinquième portion de piste conductrice (2.31) étant égale à la distance (d24) entre la troisième portion de piste conductrice (2.21) et la septième portion de piste conductrice (2.41).

Fig. 1

Fig. 2

Fig. 3

Fig. 4

Fig. 5

2.43  2.3
2.23   2.4
2.33
TG      2.13              R
TP/2        d13           2.12
      d12    2.11         2.32
                          2.22
      d24    2.21          2.42
             2.31
                  P3132
                  P1112              P4142
                                     P2122
R
2.1  2.2                             2.14
        2.41                         2.34
                                     2.24
           P4142                     2.44
              P2122

Fig. 6

2.12                              2.11

2.22                              2.21

        2.5        2.6

Fig. 7

1

1.3

1.5    1.21
       1.22
       1.23
       1.24

⊗A

1.2

1.1

1.11
1.12
1.13
1.14

Fig. 8

2.1
2.2

TS1

U, φ

2.7        2.7

TS2

⊗A

2.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2329225 B1
- EP 0909955 A2
- EP 1715298 A2